Europäisches Patentamt

European Patent Office

Office européen des brevets

(19)

(11) Veröffentlichungsnummer : **0 072 583**
**B1**

(12) **EUROPÄISCHE PATENTSCHRIFT**

(45) Veröffentlichungstag der Patentschrift :
20.02.85

(21) Anmeldenummer : **82200805.8**

(22) Anmeldetag : **30.06.82**

(51) Int. Cl.⁴ : **H 02 M 3/335**

(54) **Gleichspannungswandler.**

(30) Priorität : **18.08.81 CH 5322/81**

(43) Veröffentlichungstag der Anmeldung :
**23.02.83 Patentblatt 83/08**

(45) Bekanntmachung des Hinweises auf die Patenterteilung : **20.02.85 Patentblatt 85/08**

(84) Benannte Vertragsstaaten :
**AT BE DE FR GB IT LU NL SE**

(56) Entgegenhaltungen :
**DE-A- 2 819 676**
**FR-A- 2 389 268**
**US-A- 3 733 519**
**US-A- 3 790 878**

(73) Patentinhaber : **Gebrüder Zehnder AG**
**CH-5722 Gränichen (CH)**

(72) Erfinder : **Härri, Kurt**
**Im Höfli 490**
**CH-5727 Oberkulm (CH)**

(74) Vertreter : **Seifert, Helmut E.**
**RITSCHER & SEIFERT Patentanwälte VSP Auf der Mauer 4**
**CH-8001 Zürich (CH)**

EP 0 072 583 B1

Jouve, 18, rue St-Denis, 75001 Paris, France

## Beschreibung

Die Erfindung betrifft einen Gleichspannungswandler mit einem Transformator, dessen Primärwicklung in Serie mit mindestens einem Schaltelement an die Gleichspannungsquelle angeschlossen ist und dessen Sekundärwicklung über eine Gleichrichtereinrichtung mit einem Verbraucher verbunden ist.

Es sind Gleichspannungswandler bekannt, bei denen eine Gleichspannungsquelle an die Primärseite eines Transformators gelegt wird und am Ausgang der Primärwicklung ein oder eine Reihe von Schalttransistoren den Primärstrom von der Spannungsquelle zur Masse unterbrechen können. Durch Hin- und Herschalten der Transistoren wird der Primärstrom zerhackt, wobei die Impulsform mehr oder weniger rechteckig ist. Der an der Sekundärseite des Transformators induzierte Strom wird über einen Gleichrichter einem Verbraucher zugeführt. Bei den bekannten Gleichspannungswandlern wird jedoch mittels des Gleichrichters nur der Magnetisierungsstrom durchgelassen und ausgenützt, während der Entmagnetisierungsstrom verloren geht und damit der Wirkungsgrad der Umwandlung relativ schlecht ist.

Ferner ist es bei den bekannten Gleichspannungswandlern mit Schalttransistoren von Nachteil, dass beispielsweise bei grossen und plötzlichen Laständerungen Spannungsspitzen auftreten, welche die ungeschützten Transistoren zerstören können.

Bei einem anderen Typ von Gleichspannungswandlern wird mittels des hochgespannten Primärstroms ein Motor betrieben, welcher einen Generator antreibt, der dann die niedrigere Spannung liefert. Bei dieser Art von Gleichspannungswandlern ist es von Nachteil, dass auch im Leerlauf eine beträchtliche Leistung zum Betrieb von Motor und Generator der primären Spannungsquelle entzogen wird.

Da die Primärspannung bei bestimmten Verwendungsarten eines eingangs beschriebenen Gleichspannungswandlers zu hoch ist, um mittels eines herkömmlichen Halbleiterelements geschaltet zu werden, ist es bekannt, mehrere Halbleiterelemente in Serie zu schalten, um damit die Spannung aufzuteilen. Bei bekannten Ausführungsarten ist diese Aufteilung jedoch in der Weise unbefriedigend, dass die Teilspannungen nicht genügend symmetriert sind, d. h. dass nicht an jedem Halbleiterelement die gleiche Spannung abfällt.

Es ist Aufgabe der Erfindung, diese Nachteile zu vermeiden und einen Gleichspannungswandler zu schaffen, welcher den Wirkungsgrad der Umwandlung erhöht, welcher einen guten Schutz gegen Strom- und Spannungsstösse bietet und der auch bei hohen Primärspannungen deren Teilung auf ein für die einzelnen Halbleiterschalter absolut sicheres Mass gewährleistet.

Diese Aufgabe wird erfindungsgemäss gelöst durch einen Gleichspannungswandler der eingangs genannten Art, welcher dadurch gekennzeichnet ist, dass die Sekundärwicklung zweiteilig ausgeführt ist, wobei der Verbindungspunkt der beiden Wicklungsteile mit dem einen Anschluss des Verbrauchers und der Endpunkt jedes Wicklungsteils über je einen Gleichrichter mit dem anderen Anschluss des Verbrauchers verbunden ist, und dass das mindestens eine Schaltelement ein Transistor ist, dem eine in Durchlassrichtung gepolte Diode vorgeschaltet ist und ein spannungsbestimmender Widerstand und ein Kondensator parallel geschaltet sind.

Durch die Aufteilung der Sekundärwicklung in zwei Teilwicklungen, welche über die entsprechenden Gleichrichterdioden antiparallel an den Verbraucher geschaltet sind, wird nicht nur der Magnetisierungsstrom, sondern auch der Entmagnetisierungsstrom, der nach dem Abschalten der Spannungsquelle induziert wird, genutzt. Hierdurch ergibt sich eine bessere Ausnützung der Primärleistung.

Die in den kollektorkreisen der Schaltelemente angeordneten Dioden verhindern, dass bei einer Spannungsumkehrung, die beispielsweise durch eine sprunghafte Laständerung bewirkt werden kann, die Transistoren zerstört werden.

Bei hohen Primärspannungen werden mehrere Schalttransistoren verwendet, um die Schaltspannung an die Kennwerte der Transistoren anzupassen. Die Schalter sind dabei in Serie geschaltet und erhalten über einen aus mehreren Widerständen bestehenden Spannungsteiler ihre individuellen Emitter-Kollektor-Vorspannungen. Zwischen den einzelnen Widerständen sind ebenfalls Dioden angeordnet, welche negative Störspannungen abhalten.

Parallel zu den Widerständen sind Kondensatoren angeordnet, welche positive Schaltspannungsspitzen, die insbesondere bei grossen Schaltleistungen auftreten, absorbieren.

Die Ansteuerung der Schaltelemente erfolgt durch einen Impulsgenerator, dessen Impulse mittels einer Verzögerungsschaltung eine bestimmte Zeitspanne nach Zu- und Abschalten der Primärspannungsquelle verzögert werden.

Die Ansteuerung erfolgt hierdurch über Trenntransformatoren, deren Primärwicklungen parallel zueinander an den Impulsgenerator angeschlossen sind und deren Sekundärwicklungen in den Basis-Emitterkreisen der Schaltelemente liegen.

Vorteilhafterweise ist in der Leitung zwischen den Gleichrichtern der Sekundärwicklungen des Haupttransformators und dem Verbraucher — falls es sich bei diesem um eine Akkumulatorbatterie handelt — ein Schaltelement in Form eines Ladebegrenzers angeordnet.

Die Erfindung wird anhand einer Figur, welche ein Schaltbild des erfindungsgemässen Gleichspannungswandlers zeigt, näher erläutert.

Ueber eine Eingangsklemme 11 wird die Primärspannung der Primärwicklung 20 des Transformators 10 zugeführt. An den Ausgang der Primärwicklung 20 ist in Serie eine Mehrzahl von $n + 1$ Schalttransistoren 16, 16' ... $16^n$ geschlossen, wobei alle Kollektor-Emitter-Strecken der Schalttransistoren in Serie hintereinander liegen. Der Emitter des letzten Transistors $16^n$ liegt auf Masse. In Stromrichtung vor allen Kollektoren sind Dioden 18, 18' ... $18^n$ angeordnet.

Die Emitter der Transistoren 16, 16' ... $16^n$ sind einerseits über die Dioden 18' ... $18^n$ an die Kollektoren der jeweils nachfolgenden Transistoren angeschlossen und andererseits mit den entsprechenden Abgriffspunkten eines aus gleich grossen Widerständen 14, 14' ... $14^n$ bestehenden Spannungsteilers verbunden, welcher die am Ausgang der Primärwicklung 20 stehende Spannung (bezüglich der Masse) in $n + 1$ gleiche Teile teilt. Die Widerstände 14-$14^n$ sind durch Dioden 17, 17' ... $17^n$ voneinander getrennt und jedem Widerstand ist ein Kondensator 15, 15' ... $15^n$ parallel geschaltet.

Auf einem zweiten Weg gelangt die Primärspannung an eine Verzögerungseinheit 12. Ein Taktgenerator 13 weist einen Ausgang auf, der mit der Basis eines Transistors 30 verbunden ist, dessen Emitter mit der Verzögerungseinheit 12 und dessen Kollektor mit einer Mehrzahl von Primärwicklungen 9-$9^n$ von Trenntransformatoren 9, 9' ... $9^n$ verbunden sind. Die Sekundärwicklungen 19, 19' ... $19^n$ dieser Trenntransformatoren liegen in den jeweiligen Basis-Emitterkreisen der Schalttransistoren 16, 16' ... $16^n$. Die Ausgänge der Primärwicklungen 9-$9^n$ sowie ein Eingang 32 der Verzögerungseinheit 12 und der Eingang 33 des Impulsgenerators 13 sind an den mit den Gleichrichterdioden 23 und 24 verbundenen Eingang des Verbrauchers 25 geschlossen.

Die Sekundärwicklung des Transformators 10 ist in zwei Teilwicklungen 21 und 22 unterteilt, welche einen Mittelabgriff 29 aufweisen. Der Verbraucher 25 ist einerseits mit dem Mittelabgriff 29 direkt und andererseits mit den äusseren Enden der Teilwicklungen 21, 22 jeweils über eine Diode 23 bzw. 24 verbunden. Zwischen den Dioden 23, 24 einerseits und dem Verbraucher 25 andererseits ist ein Stromventil 27 angeordnet, dessen Steuerelektrode mit einer Ladungsbegrenzerschaltung 26 verbunden ist. Diese Ladungsbegrenzerschaltung ist nur dann vorgesehen, wenn es sich beim Verbraucher um eine Akkumulatorbatterie handelt. Beide Eingänge der Ladungsbegrenzerschaltung 26 sind mit den Anschlüssen des Verbrauchers verbunden.

Die Arbeitsweise der eben im Aufbau beschriebenen Schaltung ist die folgende : Die an die Eingangsklemme 11 angelegte Gleichspannung gelangt an die Primärwicklung 20 des Transformators 10. Beim Anlegen der Gleichspannung fliesst zuerst ein kleiner Ladestrom für die Kondensatoren 15-$15^n$. Am Kollektor des ersten Transistors 16 steht nach Beendigung des Ladestroms das volle Potential der Klemme 11, abzüglich des Spannungsabfalls der stromlosen Primärspule und desjenigen an der Diode 18, welcher vernachlässigbar ist. Am Emitter des Transistors 16 sowie am Kollektor des Transistors 16' steht das Potential der durch den Widerstand 14 einerseits und der Summe der Widerstände 14'-$14^n$ andererseits geteilten Ausgangsspannung der Primärspule 20. Auf diese Weise steht an allen $n + 1$ Transistoren die gleiche Kollektor-Emitterspannung.

Der nach der erwähnten Verzögerungszeit anlaufende Taktgenerator 13 steuert periodisch die Primärwicklungen 9-$9^n$ der Trenntransformatoren an, so dass in den Sekundärwicklungen 19-$19^n$ Spannungen erzeugt werden, welche die Basen der Transistoren 16-$16^n$ um eben diese induzierten Spannungen über das in den Sperrphasen auf Emitterpotential liegende Basisniveau erhöhen, wodurch die Transistoren aufgesteuert werden.

Wenn die Transistoren schliessen, beginnt sofort ein von Null aus ansteigender Strom durch die Kollektor-Emitterstrecken und die Primärwicklung 20 des Transformators 10 zu fliessen, und in der Sekundärwicklung 22 wird eine Spannung induziert, deren Richtung einen in Durchlassrichtung der Diode 24 fliessenden Strom hervorruft.

Im Parallelzweig der Wicklung 21 wird der Strom durch die verkehrt gepolte Diode 23 unterbunden.

Nach dem Ende der die Taktphasen bestimmenden Impulse des Impulsgenerators 13 fliesst ein Entmagnetisierungsstrom durch die Wicklung 21, der in der Gegenrichtung zum Magnetisierungsstrom verläuft. Ueber die Diode 23 fliesst dieser Strom zum Verbraucher.

Die Schalttransistoren, welche in Serie zwischen der Primärwicklung 20 und der Masse liegen, sind durch den aus den gleich grossen Widerständen 14-$14^n$ bestehenden Spannungsteiler, welcher von der Ausgangsspannung der Primärwicklung $(n + 1)$ gleiche Spannungsstufen erzeugt, alle im gleichen Schaltzustand, so dass sie gleichzeitig schalten. Dies ist inbezug auf den Stromverlauf von Vorteil und kommt daher, dass alle Emitter-Kollektor-Spannungen sowie die Basisspannungen gleich sind.

Ueber die Leitung 31 wird die Sekundärspannung an den Ausgang der Primärwicklungen 9-$9^n$ der Trenntransformatoren sowie an die Verzögerungseinheit 12 und den Impulsgenerator 13 gebracht. Der Impulsgenerator 13 steuert die Basis eines Transistors 30 an, dessen Emitter über einen Widerstand 40 und der Basis verbunden und über die Verzögerungseinheit 12 und der Masseleitung verbindbar ist. Solange die Verzögerungseinheit die Verbindung zur Masse unterbricht, liegt an der Basis und am Emitter des Transistors 30 die gleiche Spannung, weshalb die vom Impulsgenerator 13 an die Basis geleiteten Impulse wirkungslos bleiben. Erst wenn nach Ablauf der Verzögerungszeit die Verzögerungseinheit den Emitter des Transistors 30 mit der Masseleitung verbindet, kann der Transistor von den Impulsen auf- und zugesteuert und können Steuerimpulse über die Trenntransformatoren zu den Schalttransistoren 16-16$^n$ geleitet werden.

Bei Verwendung des erfindunsgemässen Gleichspannungswandlers als Ladegerät für eine Akkumulatorbatterie wird vorteilhafterweise eine Ladebegrenzerschaltung 26 verwendet, die ein Stromventil 27 steuert. Eine geeignete Ladebegrenzungsschaltung ist in der CH-PS 600'646 beschrieben. Diese Schaltung bestimmt den Istwert der Spannung der Akkumulatorbatterie und erzeugt ein Sperrsignal für das Stromventil, sobald diese Spannung den Sollwert erreicht.

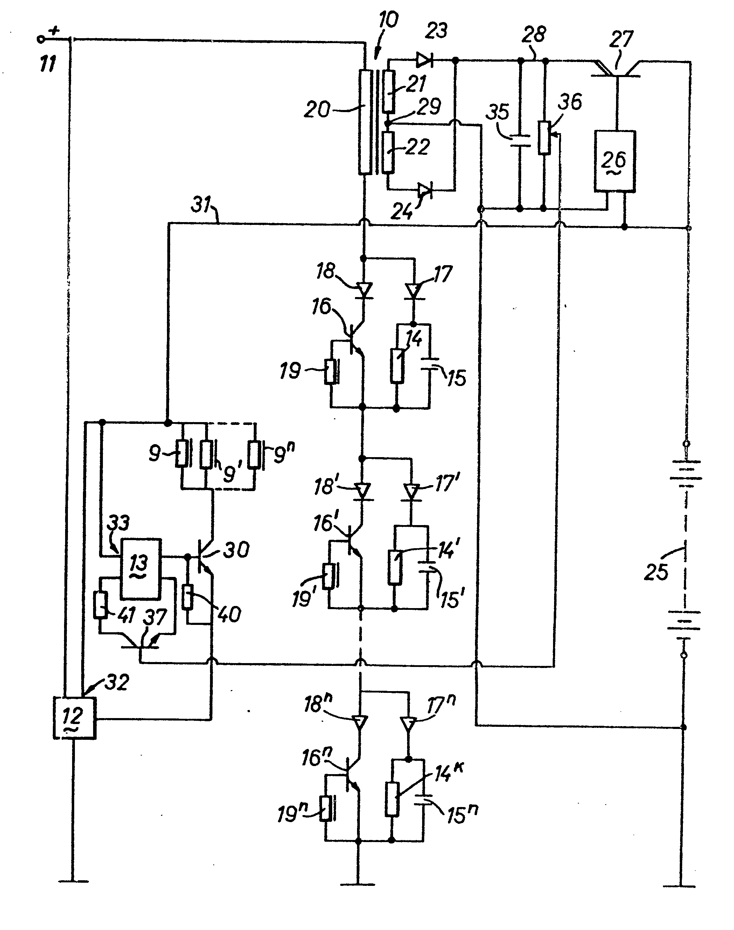

Bei der in der Figur gezeigten, bevorzugten Ausführungsform des neuen Gleichspannungswandlers wird ein Impulsgenerator 13 verwendet, dessen Impulsbreite durch einen veränderbaren Aussenwiderstand eingestellt werden kann. Weiter ist zwischen dem Mittelabgriff 29 der Sekundärwicklung des Transformators 10 und die ausgangsseitige Leitung der beiden Dioden 23, 24 an den äusseren Enden der Teilwicklungen 21, 22 ein Glättungskondensator 35 angeschlossen, dem ein Potentiometer 36 parallel geschaltet ist. Der Abgriff des Potentiometers ist mit der Basis eines Transitors 37 verbunden, dessen Emitter direkt und dessen Kollektor über einen Seriewiderstand 41 mit den für den Aussenwiderstand vorgesehen Anschlüssen am Impulsgeber 13 verbunden ist. Mit dieser Form der Rückkoppelung wird erreicht, dass bei kleiner Last am Sekundärkreis und entsprechend hoher Spannung am Glättungskondensator und an der mit dem Mittelabgriff des Potentiometers verbundenen Basis des Transistors der Transitor eine relativ hohe Leitfähigkeit bzw. einen geringen Leitungswiderstand aufweist und darum der Impulsgeber Impulse mit kurzer zeitlicher Dauer erzeugt, während bei einer grossen Last und entsprechend kleiner Spannung am Glättungskondensator und an der Basis des Transistors der letztere einen relativ hohen Leitungswiderstand aufweist und darum der Impulsgeber Impulse mit längerer zeitlicher Dauer erzeugt. Dies dynamische Rückwärtsregelung ermöglicht nicht nur eine Anpassung der übertragenen Leistung an die Last, sondern verhindert auch, dass bei einer sprunghaften Verringerung der Last, oder beim Leerlauf, die Spannung im Sekundärteil des Wandlers zu stark ansteigt.

Die Verwendung eines erfindungsgemässen Gleichspannungswandlers ist keinesfalls auf das Laden von Akkumulatoren beschränt, sonder kann überall dort erfolgen, wo eine höhere Gleichspannung in eine niedrigere umgeformt werden soll.

Dabei versteht scih, dass solche Ausführungsformen des Gleichspannungswandlers, die nicht zum Laden eines Akkumulators vorgesehen sind, eine zusätzliche Speisespannungsquelle für den Impulsgenerator und die Verzögerungsschaltung aufweisen müssen, während die Ladungsbegrenzerschaltung mit dem Stromventil nicht erforderlich ist. Die zusätzliche Speisespannungsquelle kann beispielsweise ein Kleinakkumulator oder eine aufladbare Batterie sein, oder ein an die Primärspannung angeschlossener Gleichspannungswandler kleiner Leistung. Schliesslich versteht sich auch, dass für solche Anwendungen, bei denen die Primärspannungen keine sprunghaften Unterbrechungen aufweist, auch keine Verzögerungsschaltung erforderlich ist.

Bei einer zum Laden der Akkumulatorenbatterien von Schienenfahrzeugen erprobte Ausführungsform betrug die Primärspannung 600 V. Es wurden sechs Schalttransistoren mit dazugehörigen Widerständen, Kondensatoren und Dioden verwendet. Die Sekundärspannung sowie die Batteriespannung betrug 24 V. Die sekundäre Stromstärke lag bei etwa 8 A. Die Widerstände wiesen 15 k und die Kondensatoren eine Kapazität von 0,1 μF auf. Der Impulsgenerator lieferte eine Impulsfolge von 1 000 Hz mit einem Tastverhältnis von 3 : 1. Die Verzögerungszeit der Verzögerungseinheit betrug etwa 3 Sekunden.

Der Wandler hat sich trotz der durch Springen des Stromabnehmerbügels bewirkten Unterbrechungen der Primärspannung und der durch Vereisen der Stromführleitung und Verschmutzen der Schienen bedingten Schwankungen der Primärspannung während der Langdauererprobung bestens bewährt.

**Ansprüche**

1. Gleichspannungswandler mit einem Transformator (10), dessen Primärwicklung (20) in Serie mit mindestens einem Schaltelement (16) an die Speisespannungsquelle (11) angeschlossen ist, und dessen Sekundärwicklung (21, 22) über eine Gleichrichtereinrichtung (23, 24) mit einem Verbraucher (25) verbunden ist, dadurch gekennzeichnet, dass die Sekundärwicklung (21, 22) zweiteilig ausgeführt ist, wobei der Verbindungspunkt (29) der beiden Wicklungsteile mit dem einen Anschluss des Verbrauchers (25) und der Endpunkt jedes Wicklungsteils über je einen Gleichrichter (23, 24) mit dem anderen Anschluss des Verbrauchers (25) verbunden ist, und dass das mindestens eine Schaltelement (16) ein Transistor ist, dem eine in Durchlassrichtung gepolte Diode (18) vorgeschaltet ist und ein spannungsbestimmender Widerstand (14) und ein Kondensator (15) parallel geschaltet sind.

2. Gleichspannungswandler nach Anspruch 1, dadurch gekennzeichnet, dass zur Primärwicklung (20) des Transformators (10) eine Mehrzahl von Transistoren (16-16$^n$) in Serie geschaltet sind, wobei parallel zu jeder Transistor-Dioden-Serieschaltung (16, 18 ... 16$^n$, 18$^n$) eine Widerstands-Dioden-Serieschaltung (14, 17 ... 14$^n$, 17$^n$) angeschlossen ist und ein Parallelkondensator (15) dem Widerstand parallel geschaltet ist.

3. Gleichspannungswandler nach Anspruch 2, dadurch gekennzeichnet, dass ein Impulsgenerator (13) zum Steuern des mindestens einen Schaltelements (16) vorgesehen und an die Primärspannungsquelle (11) eine Verzögerungsschaltung (12) angeschlossen ist, welche beim Ein- und Ausschalten der Primärspannungsquelle (11) das Weiterleiten bzw. Unterbrechen der Impulse vom Impulsgenerator (13) zur Steuerelektrode des mindestens einen Schaltelements (16) verzögert.

4. Gleichspannungswandler nach Anspruch 3, dadurch gekennzeichnet, dass vom Impulsgenerator (13) eine oder eine Mehrzahl von zueinander parallel geschalteten Primärwicklungen (9 ... $9^n$) von Trenntransformatoren (9, 19 ... $9^n$, $19^n$) angesteuert werden, deren Sekundärwicklungen (19 ... $19^n$) in den Basis-Emitter-Kreisen der Schaltelemente (16 ... $16^n$) angeordnet sind.

5. Gleichspannungswandler nach Anspruch 4, dadurch gekennzeichnet, dass in der Leitung (28) zwischen der Sekundärwicklung (21, 22) und dem Verbraucher (25) ein Schaltelement (27) vorgesehen ist, das von einem Steuerkreis (26) in Abhängigkeit von der Spannung am Verbraucher (25) gesteuert wird.

6. Gleichspannungswandler nach Anspruch 3, dadurch gekennzeichnet, dass der Impulsgenerator (13) einen Aussenwiderstand (41) mit einem in Serie geschalteten Transistor (37) zum Einstellen der Breite der erzeugten Impulse aufweist, und der Verbindungspunkt (29) der beiden Wicklungsteile (21, 22) mit dem einen und die Gleichrichter (23, 24) an den Endpunkten jedes Wicklungsteils ausgangsseitig mit dem anderen Anschluss eines Glättungskondensators (35) verbunden sind und diesem Kondensator (35) ein Potentiometer (36) parallel geschaltet ist, und zum Steuern der Impulsbreite in Abhängigkeit von der lastbedingten Spannung am Glättungskondensator der Abgriff des Potentiometers mit der Basis des Serietransistors (37) verbunden ist.

**Claims**

1. Constant voltage converter comprising a transformer (10), of which the primary winding (20) in series with at least one switching element (16) is connected to the supply voltage source (11), and the secondary winding (21, 22) of which is connected via a rectifier device (23, 24) with a consumer device (25), characterised in that the secondary winding (21, 22) is constructed in two parts, the junction point (29) of two parts of the winding being connected with one terminal of the consumer device (25) and the end point of each winding part being connected each via a rectifier (23, 24) with the other terminal of the consumer device (25), and that the at least one switching element (16) is a transistor, before which a diode (18) polarized in the conducting direction is connected and in parallel with which a voltage-determining resistor (14) and a capacitor (15) are connected.

2. Constant voltage converter according to claim 1, characterised in that a plurality of transistors ($16$-$16^n$) are connected in series with the primary winding (20) of the transformer (10), a resistor-diode series circuit (14, 17 ... $14^n$, $17^n$) being connected in parallel with each transistor- diode series circuit (16, 18 ... $16^n$, $18^n$) and a parallel capacitor (15) being connected in parallel with the resistor.

3. Direct voltage converter according to claim 2, characterised in that a pulse generator (13) for controlling the at least one switching element (16) is provided and a delay circuit (12) is connected to the primary voltage source (11), which delay circuit delays the transmitting and interrupting respectively of the pulses from the pulse generator (13) to the control electrode of the at least one switching element (16) when the primary voltage source (11) is switched on and off.

4. Constant voltage converter according to claim 3, characterised in that one or a plurality of primary windings (9 ... $9^n$), connected in parallel with one another, of isolating transformers (9, 19 ... $9^n$, $19^n$) are governed by the pulse generator (13), of which the secondary windings (19 ... $19^n$) are disposed in the base-emitter circuits of the switching elements (16 ... $16^n$).

5. Constant voltage converter according to claim 4, characterised in that in the line (28) between the secondary winding (21, 22) and the consumer device (25) a switching element (27) is provided, which is controlled by a control circuit (26) as a function of the voltage at the consumer device (25).

6. Constant voltage converter according to claim 3, characterised in that the pulse generator (13) possesses an external resistor (41) with a transistor (37) connected in series for setting the width of the generated pulses, and the junction point (29) of the two winding parts (21, 22) is connected with the one terminal and the rectifiers (23, 24) at the end point of each winding part are connected at their output sides with the other terminal of a smoothing capacitor (35), and that a potentiometer (36) is connected in parallel with this capacitor (35), and that for controlling the pulse width as a function of the load-determined voltage at the smoothing capacitor the pick-up of the potentiometer is connected with the base of the series transistor (37).

**Revendications**

1. Convertisseur de courant continu avec un transformateur (10), dont l'enroulement primaire (20) en série avec des moyens de commutation comprenant au moins un élément de commutation (16) est raccordé à la source de tension d'alimentation (11), et dont l'enroulement secondaire (21, 22) est relié par un dispositif redresseur (25) caractérisé en ce que l'enroulement secondaire (21, 22) est réalisé en deux parties, le point de jonction (29) des deux parties d'enroulement étant relié à l'une des bornes du récepteur (25) et l'extrémité de chaque partie d'enroulement étant respectivement reliée par l'intermédiaire d'un redresseur (23, 24) à l'autre borne du récepteur (25) et en ce que les moyens de commutation (16) comprennent au moins un transistor, qui est placé en aval d'une diode (18) polarisée dans le sens passant, et auquel sont branchés en parallèle une résistance (14) déterminant la tension et un condensateur (15).

2. Convertisseur de courant continu selon la revendication 1, caractérisé en ce que plusieurs transistors (16-16$^n$) sont montés en série avec l'enroulement primaire (20) du transformateur (10), un montage en série d'une résistance et d'une diode (14, 17 ... 14$^n$, 17$^n$) est raccordé en parallèle à chacun des montages en série transistor-diode (16, 18 ... 16$^n$, 18$^n$), et un condensateur parallèle (15) est monté en parallèle sur la résistance.

3. Convertisseur de courant continu selon la revendication 2, caractérisé en ce qu'un générateur d'impulsions (13) est prévu pour commander les moyens de commutation (16) et un circuit de retard (12) est raccordé à la source primaire de tension (11) lequel, par enclenchement et déclenchement de la source primaire de tension (11), retarde la continuation ou l'interruption des impulsions du générateur (13) vers l'électrode de commande des moyens de commutation (16).

4. Convertisseur de courant continu selon la revendication 3, caractérisé en ce que, du générateur d'impulsions (13) sont commandés un ou plusieurs enroulements primaires (9 ... 9$^n$), montés parallèlement entre eux, de transformateurs séparateurs (9, 19 ... 9$^n$, 19$^n$) dont les enroulements secondaires (19 ... 19$^n$) sont placés dans les circuits base-émetteur des moyens de commutation (16 ... 16$^n$).

5. Convertisseur de courant continu selon la revendication 4, caractérisé en ce que, dans la ligne (28) entre les enroulements secondaires (21, 22) et le récepteur (25), est prévu un élément de commutation (27) qui est commandé par un circuit de contrôle (26) en fonction de la tension aux bornes du récepteur (25).

6. Convertisseur de courant continu selon la revendication 3, caractérisé en ce que le générateur d'impulsions (13) comporte une résistance extérieure (41) avec un transistor (37) monté en série pour régler la largeur de l'impulsion produite, et le point de jonction (29) des deux parties d'enroulement (21, 22) est relié avec l'une des bornes d'un condensateur de lissage (35) et la sortie des redresseurs (23, 24) aux extrémités de chaque partie d'enroulement est reliée avec l'autre des bornes du condensateur de lissage (35), et, un potentiomètre (36) est monté en parallèle avec ce condensateur (35), et, pour commander la largeur de l'impulsion en fonction de la tension conditionnée par la charge aux bornes du condensateur de lissage, le curseur du potentiomètre est relié à la base du transistor série (37).